# EUROPEAN PATENT APPLICATION

(11) **EP 1 247 436 A1**
(43) Date of publication of application: **09.10.2002**
(21) Application number: 01201213.4
(22) Date of filing: 02.04.2001
(51) Int. Cl.: A01C 1/06

(54) **Polymeric coatings for seeds or embryos**

(71) Applicant: Incotec International B.V., 1601 BL Enkhuizen (NL)
(72) Inventor: The designation of the inventor has not yet been filed
(74) Representative: Prins, Adrianus Willem

(57) **Abstract**

The invention relates to coated seeds and methods for preparing coated seeds. The invention provides a method for coating seeds and/or embryoids with a polymeric envelope characterised by using an organic solvent in an essential anhydrous polymerisation reaction.

## Description

The invention relates to coated seeds and methods for preparing coated seeds.

Seed coating is a practice which has become widespread. It is aimed in particular at improving the germination characteristics, at providing various additives capable of intervening at any time during the formation and growth of plants, at protecting the seeds or at providing to the seed a shape or size which makes it suitable for automatic handling. During the coating, use is made of water, particularly for moistening the seeds before the coating operation as such, to solubilise or disperse at least one of the constituents of the coating or to solubilize or disperse the adhesive agents employed to ensure the adhesion of the other constituents of the coating. The presence of water presents disadvantages which are particularly marked when the seeds are poorly protected and absorb water rapidly. In fact some seeds can absorb water during the coating operation, which may result in a premature initiation of germination, with the result that the seeds can no longer be stored. Furthermore, it is frequently difficult to rapidly dry the seed correctly under the coating layer, which entails risks of spoilage during the storage.

Another disadvantage of the presently used coatings is that the coatings dissolve very rapidly when they come in contact with water and as a result active additives incorporated in such coatings are released to the soil immediately and are not available anymore for the germinating seed.

The present invention describes the finding that seeds and/or embryoids coated with a polymeric envelope (or hydrogels; the terms may be used interchangeable herein) in a process which comprises an organic solvent in an essential anhydrous polymerisation reaction results in seeds which do not have to be dried anymore and which have improved germination and subsequent growth of the seedlings. The surprising finding that the seeds are not affected by the organic solvent and that the polymerisation reaction is carried out under essential anhydrous circumstances opens a new array of possibilities. For example, additives which are water-unstable/water-reactive (for example due to a hydrolysis reaction) or water-insoluble are now added to the coating in an organic solvent-based solution.

The present application differs sharply from patent application WO 99/07654 (A. Markus et al.) which describes the possibility to coat granules of chemicals (fertilizers) with poly urethane, poly urea and poly olephins envelops in order to produce coated granules with slow controlled release properties of active ingredients. This WO 99/07654 patent application describes the use of poly urethane, poly urea and poly olephins coatings on chemicals (non-living objects). There is not a disclosure or suggestion that this coating procedure is applicable for (quiescent) living objects. It was not until the present invention that a (quiescent) living object (for example a seed) is provided with a polymeric envelope via an essential anhydrous polymerisation reaction comprising an organic solvent without any detrimental effect on for example germination.

In a first embodiment the invention provides a method for coating seeds and/or embryoids with a polymeric envelope characterised by using an organic solvent in an essential anhydrous polymerisation reaction. Seeds are herein defined as raw and/or pelleted seeds. A method as provided by the invention is used to coat different types of seeds, such as the seeds of leguminous plants, graminaceae, solanaceae or asteraceae plants. In general, it is employed for the seeds of leguminous plants such as various kinds of peas, beans or alfalfa, the seeds of graminaceaea such as rye-grass and the cereals (maize, oat rye, wheat, sorghum, barley, rice and so on), the seeds of asteraceae plants such as lettuce, or the soloanaceae such as the seeds of tobacco or tomato. Under certain conditions the somatic cells in a plant can resume cell division or differentiate into another cell-type. Plant cells also displays this plasticity in cell culture. When a piece of plant tissue is cultured under appropriate conditions many of the cells are stimulated to divide which in the end lead to the formation of callus (a mass of relatively undifferentiated cells). By manipulating nutrients and growth regulators a whole new plant can be generated from a piece of callus. An embryoid (also called "artificial seed") is herein defined as callus material which has the capability to form a new plant.

The polymeric envelope is formed by a reaction between components, which form a polymeric envelope around a seed or embryoid, after a polymerisation reaction. As disclosed herein, the use of an organic solvent in an essential anhydrous polymerisation reaction led to the surprising finding that seeds are not negatively affected by the organic solvent. The viability of the seeds prepared by a method according to the invention was not affected and furthermore the germination and the subsequent growth of seedlings was even improved when compared to conventional coated seeds. By performing an essential anhydrous polymerisation reaction the seeds
cannot take up any water and thereby the unwanted initiation of germination is prevented. Conventional drying of seed has the drawback that it is difficult and energy- and time consuming to completely dry the seed underneath the coating and as a consequence not all water is removed which lead to accelerated ageing of the seeds. An other advantage of an essential anhydrous reaction as provided by the present invention is that the seeds do not have to be dried anymore which saves time (at least 30 minutes), removes the risks of residual moisture and makes the logistics of the process of seed coating easier. Experiments as disclosed herein show that the coat is permissive for water, which is important for initiation of germination after the seeds have been sown. An essential anhydrous polymerisation reaction is herein defined as a reaction which essentially does not involve water, but it is clear to a person skilled in the art that the basic components for the reaction might not always be 100% anhydrous and therefor the presence of a minor amount of water cannot be ruled out.

In yet another embodiment the invention provides a method for coating seeds and/or embryoids with a polymeric envelope characterised by using an organic solvent in an essential anhydrous polymerisation reaction wherein said polymeric envelope further comprises at least one additive selected from the group of plant protection products, plant growth hormones, growth stimulants, fillers and fertilizers. Seeds and/or embryoids coated according to a method of the invention contain various additives. One such an additive is a plant protection product which gives protection to various harmful agents. Examples of plant protection products are insecticides, nematocides, fungicides, disinfectants, repellents, or bactericides. Another additive is a plant growth hormone. Plant growth hormones play a role in plant development. There are different classes of growth hormones (for example auxins, gibberellins, cytokinins, abscisic acid or ethylene) which in general are all small molecules which are easily be taken up from the envelope by a germinating seed or embryoid and perform all different kinds of functions (alone or in combination with each other). The addition of plant growth hormones to seed and/or embryoid coatings is used for example to stimulate root and/or shoot formation after germination. A growth stimulant is also added as an additive to the coat of seeds and/or embryoids. Growth stimulants are less defined extracts and in general it is not know which component or components give a beneficial effect to,for example, the germination of a seed or the growth of a plant. Growth stimulants can have an overlapping effect with the action of fertilizers and/or growth hormones. Typical examples of growth stimulants are seaweed or humic acid. Humic acid is a composition of different organic acids. Yet another kind of additive is a filler, for example used to provide a coated seed and/or embryoids with a colour in order to differentiate between different seed batches and/or seed species. A last example of an additive is a fertilizer which provides a nutrient for plant growth (KNO₃ is an example which is used in the experimental part). In general a fertilizer provides nitrogen, phosphate or potassium (in salt form) to a plant. It is clear that different kinds and different combinations of plant protection products, plant growth hormones, growth stimulants, fillers or fertilizers are used in a method to coat seeds and/or embryoids according to a method of the invention as long as the different additives do not interfere with each other.

In another embodiment the invention provides a method for coating seeds and/or embryoids according to the invention wherein an additive is water-unstable, water-reactive or water-insoluble. Examples of water-unstable/water-reactive components are thiram or benlate which are broken down by water. Another example is calcium peroxide which reacts with water which results in oxygen. Also superabsorbents, which can take up to 1000 times their weight in water, are now added to seeds and/or embryoids coating according to a method of the invention.

In a preferred embodiment seeds and/or embryoids coated according to a method of the invention comprises a pesticide as a plant protection product in their polymeric envelope. As an example the pesticide Gaucho® 70WP is used. In another preferred embodiment seeds and/or embryoids coated according to a method of the invention comprises a plant growth hormone, preferably gibberalic acid, in their polymeric envelope. In yet another embodiment seeds and/or embryoids coated according to a method of the invention comprises potassium nitrate (KNO₃) as a fertilizer in their polymeric envelope. The invention furthermore provides a method to add a water-unstable/water-reactive (for example due to a hydrolysis reaction) or water-insoluble additive to an envelop by dissolving the additive in an organic solvent.

In a preferred embodiment the invention provides a method for coating seeds and/or embryoids with a polymeric envelope characterised by using an organic solvent in an essential anhydrous polymerisation reaction wherein said polymeric envelope comprises poly urethane. The invention is applied with different kinds of polymeric envelopes as long as the basic
components/ingredients are stabile dissolved or dispersed in an organic solvent. In a more preferred embodiment the polymeric envelope is comprised of poly urethane, poly urea or poly olephins. Irrespective of the kind of polymeric envelope it is important that the envelope does not interfere with the uptake of water or oxygen, two essential elements for germination. The results as disclosed within the experimental part show that the viability of the seeds prepared by a method according to the invention was not affected and furthermore that the germination and the subsequent growth of seedlings was even improved when compared to conventional coated seeds. In an even more preferred embodiment a polymeric envelope is formed by a polymerisation reaction comprising isocyanate copolymer and polyethylene glycol (PEG) which lead to the formation of poly urethane. As disclosed herein different kinds (for example PEG 2000, 40000, 6000, 8000, 10,000) and amounts of PEG are used in a method according to the invention. As disclosed in the experimental part polymeric envelopes prepared with higher MW PEG result in better performing seeds and/or plants. In a preferred embodiment the polymeristion reaction is accelerated by the use of a catalyst, preferably DABCO, which is also dissolved in an organic solvent. It is clear to a person skilled in the art that a catalyst other than DABCO is also used in a method according to the invention as long as the catalyst has the ability to perform its function (providing or speeding up the polymerisation reaction) under organic solvent conditions. As is disclosed herein, a method according to the invention can be performed in 2 different direction, this means that, in the first direction, seeds and/or embryoids are first treated with the melted PEG with or without an additive or additives and then followed by treatment with for example the Voranate solution with acetone. In this case the interfacial polymerization reaction occurs after the Voranate is added to the seeds and/or embryoids. A second possibility is to first add the Voranate and in the second step applying the melted PEG. In the last case the interfacial polymerisation occurs after the addition of melted PEG.

In conventional seed coating procedures, use is made of large quantities of water, particularly for moistening the seeds before the coating operation as such, to solubilise or disperse at least one of the constituents of the coating or to solubilize or disperse the adhesive agents employed to ensure the adhesion of the other constituents of the coating. The presence of water presents disadvantages which are particularly marked when the seeds are poorly protected and absorb water rapidly. In fact some seeds absorb water during the coating operation, which may result in a premature initiation of germination, with the result that the seeds can no longer be stored. Furthermore, it is frequently difficult to rapidly dry the seed correctly under the coating layer, which entails risks of spoilage during the storage. The present invention discloses the use of an organic solvent in an essential anhydrous polymerisation reaction with two kinds of raw seeds (Lisianthus and Tobacco) and two kinds of pelleted seeds (Lettuce and Tobacco) as a model system. Results as disclosed herein show that an organic solvent (for example chloroform or acetone) does not have any detrimental effect on the germination and growth performance of the seeds. In an preferred embodiment a method according to the invention uses acetone as an organic solvent. Another example of an organic solvent (as disclosed in the experimental part herein) is chloroform. The advantage of acetone and chloroform for use in a method according to the invention is the fast evaporation of both solvents.

In a preferred embodiment a method for coating seeds and/or embryoids according to the invention comprises interfacial polymerisation. Interfacial polymerisation is defined herein as polymerisation which takes place on the interface between two monomers As disclosed herein in the experimental part continuing rotation of the monomers together with the seeds and/or embryoids leads to seeds and/or embryoids coated according to a method of the invention. It is clear that other mixing procedures are also applicable as long as the seeds and/or embryoids and the basic ingredients (with or without additives) are properly mixed to provide an uniformly coating.

In another embodiment the invention provides a method for coating pre-coated seeds and/or embryoids with a polymeric envelope characterised by using an organic solvent in an essential anhydrous polymerisation reaction. Such a method is, for example, extremely useful to provide already pre-coated seeds and/or embryoids with water-unstable/water-reactive (for example due to a hydrolysis reaction) or water-insoluble additives.

The invention will be explained in more detail in the following description, which is not limiting the invention.

### EXPERIMENTAL PART

### Hydrogel preparations

The reaction was carried out in a rotating pan. In order to get a good distribution of the monomers on the interface of the prills we used organic solvents mainly acetone, to dissolve the monomers.

To speed up the reaction and to avoid the prills to stick to each other we used DABCO as catalyst for the polymerisation. In the case of the lettuce and the tobacco prills, they were used as the core and the hydrogel with or without the additives was enveloping it. In the case of the tobacco and lisianthus seeds KNO₃ prills were the core and the seeds with or without additives were incorporated in the hydrogel which enveloped the KNO₃ prills.

### Biological tests

### Greenhouse test

117 seed prills of each coated object (pelleted or raw seed) were put into plots of 9 rows with 13 holes in each row. Depending on the species used the coated objects were germinated at 16°C or 25°C greenhouse. Germination was checked for lettuce after 2 days and a week whereas for tobacco and lisianthus were checked also after several weeks. In the case of tobacco and lisianthus the growth of seedlings was examined by measuring the fresh and dry weight.

### Water stress test

Water stress tests were carried out with 100 seed prills and formulated seed prills which were put between folded filter paper sheets which were hydrated with 10, 20, 30 and 40 ml of water. The trays with the folded filter paper and the imbibed seeds were placed in growth chambers with 24 hours light and 20°C temperature. After 7 days the germination was determined for lettuce whereas the tobacco seeds and pellets were counted at 14 days.

### Thermogradient test

Those tests were carried out on 33 seed prills or formulated ones on a round filter paper covered with a petridish in the following temperatures: 16-18,18-20,20-22,22-24,24-26,26-28,28-30,30-32,32-34 and 34-36°.

Germination in the various temperatures was determined after 1,2 and 3 days. In the end average germination figure was calculated.

### Chemical tests

### Analitycal release test

Release rates, amount of the insecticide Gaucho and the amount of the active ingredient in the formulations were determined with the use of HPLC apparatus with RP 18 column with the use of an UV detector.

### 1. Experiments with lettuce prills

### 1.1 Effect of type and amount of hydrogel

Lettuce seed prills cv Rigoletto were weighted and put into the coating pan, subsequently Voranate M-580 was dissolved in organic solvent and sprayed or poored over the prills. The coating pan was rotated till all the solvent was evaporated, than melted PEG dissolved in solvent with a little amount of DABCO was added while the coating pan rotated. The reaction, interfacial polymerisation, took several minutes after which the coated seed prills were taken out of the coating pan.

The amounts of monomers and solvents used for the coating process are described in table 1.

### 1.2 Incorporating of Gaucho 70 WP in hydrogel envelopes of lettuce prills

Gaucho wettable powder was dispersed homogeneously in solution of Voranate M-580 in acetone. This suspension was applied to the rotating prills in the coating pan. When the solvent was evaporated a solution of various kinds of PEG's containing small amounts of DABCO as catalyst were added to the prills. The interfacial polymerisation was carried out in rotating coating pan, the formulations used for coating the lettuce prills are described in the tables 2 and 3.

**Table 1:**

| Used components for coating lettuce prills | | | | | | | |
|---|---|---|---|---|---|---|---|
| **Number** | **Prills (g)** | **Voranate M580 (g)** | **Chloroform (g)** | **PEG Type** | **PEG Weigth (g)** | **Solvent Chloroform (g)** | **DABCO catalyst** |
| 0.0546.815.01 | 185 | 1 | 15 | 2000 | 4 | 4.5 | Yes |
| 0.0546.815.02 | 185 | 0.5 | 7.5 | 2000 | 2 | 4.5 | Yes |
| 0.0546.815.03 | 185 | 0.25 | 15 | 2000 | 1 | 4.5 | Yes |
| 0.0546.815.04 | 370 | 1 | 30 | 4000 | 8 | 12 | Yes |
| 0.0546.815.05 | 370 | 0.5 | 30 | 4000 | 4 | 9 | Yes |
| 0.0546.815.06 | 370 | 0.25 | 30 | 4000 | 2 | 6 | Yes |
| 0.0546.815.07 | 463 | 1 | 30 | 6000 | 12 | 21 | Yes |
| | | | **Acetone** | | | | |
| 0.0546.815.08 | 463 | 0.5 | 16 | 6000 | 6 | 0 | Yes |
| 0.0546.815.09 | 463 | 0.25 | 16 | 6000 | 3 | 15 | Yes |
| | | | | | | **Acetone** | |
| 0.0546.815.10 | 740 | 1 | 16 | 8000 | 16 | 24 | Yes |
| 0.0546.815.11 | 740 | 0.5 | 16 | 8000 | 4 | 24 | Yes |
| 0.0546.815.12 | 740 | 0.25 | 16 | 8000 | 4 | 24 | Yes |
| 0.0546.815.13 | 925 | 1 | 16 | 10000 | 20 | 32 | Yes |
| 0.0546.815.14 | 925 | 0.5 | 16 | 10000 | 5 | 32 | Yes |
| 0.0546.815.15 | 925 | 0.25 | 16 | 10000 | 5 | 32 | Yes |
| 0.0546.815.16 | **control** | | | | | | Yes |
| 0.0546.815.17 | 185 | 2 | 16 | 2000 | 8 | 12 | Yes |
| 0.0546.815.18 | 185 | 1 | 16 | 4000 | 8 | 12 | Yes |
| 0.0546.815.19 | 185 | 2 | 16 | 4000 | 16 | 12 | Yes |
| 0.0546.815.20 | 370 | 6 | 24 | 4000 | 48 | 12 | Yes |
| 0.0546.815.21 | 185 | 4 | 16 | 4000 | 32 | 12 | Yes |
| 0.0546.815.22 | 231 | 1 | 16 | 6000 | 12 | 12 | Yes |
| 0.0546.815.23 | 231 | 2 | 16 | 6000 | 24 | 12 | Yes |
| 0.0546.815.24 | 231 | 3 | 16 | 6000 | 36 | 16 | Yes |
| 0.0546.815.25 | 231 | 4 | 16 | 6000 | 48 | 24 | Yes |
| 0.0546.815.26 | 370 | 1 | 16 | 8000 | 16 | 24 | Yes |
| 0.0546.815.27 | 185 | 1 | 16 | 8000 | 6 | 12 | Yes |
| 0.0546.815.28 | 185 | 1.5 | 16 | 8000 | 24 | 24 | Yes |
| 0.0546.815.29 | 185 | 2 | 16 | 8000 | 32 | 24 | Yes |
| 0.0546.815.30 | 462 | 1 | 16 | 10000 | 20 | 24 | Yes |
| 0.0546.815.31 | 231 | 1 | 16 | 10000 | 20 | 24 | Yes |
| 0.0546.815.32 | 231 | 1.5 | 16 | 10000 | 30 | 24 | Yes |
| 0.0546.815.33 | 231 | 2 | 16 | 10000 | 40 | 24 | Yes |

**Table 2:**

| Used components for coating lettuce prills with Gaucho in different types of hydrogels | | | | | | | |
|---|---|---|---|---|---|---|---|
| **Number** | **Prills (g)** | **Voranate (g)** | **Acetone (g)** | **PEG type** | **PEG Weight (g)** | **Acetone (g)** | **Gaucho (g)** |
| 0.0579.815.01 | 185 | 1 | 16 | 2000 | 4 | 12 | 5.7 |
| 0.0579.815.02 | 370 | 1 | 16 | 4000 | 8 | 12 | 11.4 |
| 0.0579.815.03 | 462.5 | 1 | 1.6 | 6000 | 12 | 12 | 14.2 |
| 0.0579.815.04 | 740 | 1 | 32 | 8000 | 16 | 16 | 22.8 |
| 0.0579.815.05 | 925 | 1 | 40 | 10000 | 20 | 24 | 28.5 |
| 0.0579.815.06 | | | | | | | 0 |

**Table 3:**

| Used components for coating lettuce prills with Gaucho in different amounts hydrogels | | | | | | | |
|---|---|---|---|---|---|---|---|
| **Number** | **Prills (g)** | **Voranate (g)** | **Acetone (g)** | **PEG Type** | **PEG Weight (g)** | **Acetone (g)** | **Gaucho (g)** |
| 0.0592.815.01 | 370 | 0.25 | 16 | 4000 | 2 | 16 | 11.4 |
| 0.0592.815.02 | 370 | 0.5 | 16 | 4000 | 4 | 16 | 11.4 |
| 0.0592.815.03 | 185 | 0.5 | 16 | 4000 | 4 | 16 | 5.7 |
| 0.0592.815.04 | 185 | 1 | 16 | 4000 | 8 | 16 | 5.7 |
| 0.0592.815.05 | 185 | 2 | 16 | 4000 | 16 | 16 | 5.7 |
| 0.0592.815.06 | 462.5 | 0.25 | 16 | 6000 | 3 | 16 | 14.2 |
| 0.0592.815.07 | 462.5 | 0.5 | 16 | 6000 | 6 | 16 | 14.2 |
| 0.0592.815.08 | 231.2 | 0.5 | 16 | 6000 | 6 | 16 | 7.1 |
| 0.0592.815.09 | 231.1 | 1 | 16 | 6000 | 12 | 16 | 7.1 |
| 0.0592.815.10 | 231.2 | 2 | 16 | 6000 | 24 | 16 | 7.1 |

### 2. Experiments with tobacco prills

### 2.1 Effect of type and amount of hydrogel

Tobacco seed prills were coated with hydrogel in the same method as the lettuce prills, the formulations used for coating the tobacco prills are summerised in table 4.

The formulations described in tables 1 to 4 were also done in the opposite direction, this means that the prills were first treated with the melted PEG with or without an additive or additives and then followed by the treatment with the Voranate solution with acetone. In this case the interfacial polymerisation occurred after the Voranate was added to the prills.

**Table 4:**

| Used components for coating tobacco prills with different types and amount of hydrogels. | | | | | | | |
|---|---|---|---|---|---|---|---|
| **Number** | **Prills (g)** | **Voranate M-580 (g)** | **Acetone (g)** | **PEG type** | **PEG Weight (g)** | **Acetone (g)** | **DABCO use** |
| 0.0595.815.02 | 252 | 0.3 | 16 | 2000 | 1.2 | 16 | Yes |
| 0.0595.815.03 | 252 | 0.7 | 16 | 2000 | 2.8 | 16 | Yes |
| 0.0595.815.04 | 252 | 1.4 | 16 | 2000 | 5.6 | 16 | Yes |
| 0.0595.815.05 | 126 | 2.8 | 16 | 2000 | 11.2 | 12 | Yes |
| 0.0595.815.06 | 252 | 0.2 | 16 | 4000 | 1.6 | 16 | Yes |
| 0.0595.815.07 | 252 | 0.4 | 16 | 4000 | 3.2 | 16 | Yes |
| 0.0595.815.08 | 252 | 0.8 | 16 | 4000 | 6.4 | 16 | Yes |
| 0.0595.815.09 | 126 | 1.6 | 16 | 4000 | 12.8 | 12 | Yes |
| 0.0595.815.10 | 252 | 0.25 | 16 | 6000 | 3.0 | 16 | Yes |
| 0.0595.815.11 | 252 | 0.5 | 16 | 6000 | 6 | 16 | Yes |
| 0.0595.815.12 | 126 | 1 | 16 | 6000 | 12 | 12 | Yes |
| 0.0595.815.13 | 252 | 0.2 | 16 | 8000 | 3.2 | 16 | Yes |
| 0.0595.815.14 | 252 | 0.4 | 16 | 8000 | 6.4 | 16 | Yes |
| 0.0595.815.15 | 126 | 0.08 | 16 | 8000 | 12.8 | 12 | Yes |
| 0.0595.815.16 | 300 | 0.2 | 16 | 10.000 | 4 | 16 | Yes |
| 0.0595.815.17 | 300 | 0.4 | 16 | 10.000 | 8 | 16 | Yes |
| 0.0595.815.18 | 150 | 0.8 | 16 | 10.000 | 16 | 16 | Yes |

### 3. Experiment with tobacco and lisianthus seeds.

### Example 1

- phase 1: 100 gram of KNO₃ prills (15000 prills)
1 g isocyanate + 8 g acetone
rotated until acetone is evaporated
- phase 2: 4 g PEG 2000 melted + 1 g acetone + 10 mg DABCO + 2.5 g tobacco seeds (±30000) + 0.5 g gibberelic acid
All components were mixed and poured onto the wet KNO₃ prills
5 g talcum was added to prevent tackiness, prill had to be rotated for some time to complete the polymerization process

### Example 2

- phase 1: 100 gram of KNO₃ prills (15000 prills)
1 g isocyanate + 8 g acetone
rotated until acetone is evaporated
- phase 2: 4 g PEG 2000 melted + 1 g acetone + 10 mg DABCO + 2.5 g lisianthus seeds (±40000) + 0.5 g gibberelic acid
All components were mixed and poured onto the wet KNO₃ prills
5 g talcum was added to prevent tackiness, prill had to be rotated for some time to complete the polymerization process

### Example 3

- phase 1: 100 gram of KNO₃ prills (15000 prills)
1 g isocyanate + 8 g acetone
rotated until acetone is evaporated
- phase 2: 4 g PEG 2000 melted + 1 g acetone + 10 mg DABCO + 2.5 g tobacco seeds
All components were mixed and poured onto the wet KNO₃ prills
5 g talcum was added to prevent tackiness, prill had to be rotated for some time to complete the polymerization process

### Example 4

- phase 1: 100 gram of glass beads (15000 prills)
1 g isocyanate + 8 g acetone
rotated until acetone is evaporated
- phase 2: 4 g PEG 2000 melted + 1 g chloroform + 10 mg DABCO + 2.5 g tobacco seeds (±30000) + 0.5 g gibberelic acid
All components were mixed and poured onto the wet KNO₃ prills
5 g talcum was added to prevent tackiness, prill had to be rotated for some time to complete the polymerization process

### Example 5

- phase 1: 100 gram of glass beads (15000 prills)
1 g isocyanate + 8 g acetone
rotated until acetone is evaporated
- phase 2: 4 g PEG 2000 melted + 1 g chloroform + 10 mg DABCO + 2.5 g tobacco seeds
All components were mixed and poured onto the wet KNO₃ prills
5 g talcum was added to prevent tackiness, prill had to be rotated for some time to complete the polymerization process

### Example 6

- phase 1: 100 gram of KNO₃ prills (15000 prills)
1 gr. isocyanate + 8 g acetone
rotated until acetone is evaporated
- phase 2: 4 g PEG 2000 melted + 8 g acetone + 10 mg DABCO + 2.5 g tobacco seeds (±30000) + 0.5 g gibberelic acid
All components were mixed and poured onto the wet KNO₃ prills
5 g talcum was added to prevent tackiness, prill had to be rotated for some time to complete the polymerization process

### RESULTS

### 1. Lettuce prills experiments

### 1.1 Effect hydrogel type and amount:

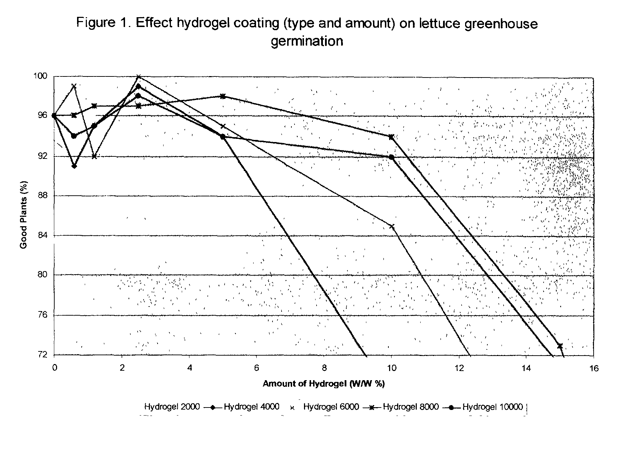

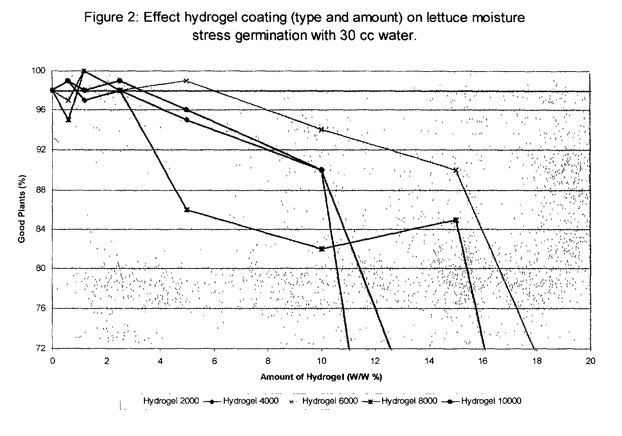

The greenhouse and moisture-stress results of the formulations described in table 1 are shown in Figure 1 and 2. These figures clearly show better performance of the hydrogel enveloped seed prills in comparison to the control, when low amounts of hydrogels are used. It is also clearly demonstrated that the hydrogels made with the PEG with high molecular weights perform better then the hydrogels with low molecular weight PEG. This is due to the fact that the hydrogels with low molecular weight PEG are too hydrophobic and therefore the moisture uptake during the first stages of germination are hindered to much.

### 1.2 Incorporating of Gaucho 70 WP in hydrogel envelopes of lettuce prills

The greenhouse results of the lettuce prills coated with hydrogel and Gaucho are shown in table 5. It seems that there is a small positive effect of type of hydrogel, because the germination of the prills with the 6000 hydrogel and Gaucho was the same as the control without Gaucho.

**Table 5:**

| Effect of Gaucho incorparation into different types of hydrogel on greenhouse germination, shown as percentage, of lettuce prills | | | |
|---|---|---|---|
| **Treatment** | **Good plants (%)** | **Abnormal plants (%)** | **Not germinated (%)** |
| Control without Gaucho | 96 | 3 | 1 |
| 2000 | 89 | 6 | 5 |
| 4000 | 90 | 8 | 2 |
| 6000 | 96 | 3 | 1 |
| 8000 | 92 | 6 | 2 |
| 10000 | 86 | 11 | 3 |

### 2. Experiments with tobacco prills

### 2.1 Effect of type and amount of hydrogel

Like for lettuce it was demonstrated with tobacco prills coated with different types and amounts of hydrogel that the germination of these coated seeds areimproved. This improved germinations are shown in Figure 3, 4 and 5.

### 3. Experiment with tobacco and lisianthus seeds

The objects described in the experimental part as examples 1 to 6 where raw seeds were used to envelope with a hydrogel of PEG 2000 (2.5%) on a core prill of potassium nitrate gave better growth results as the controls which can be seen in Figure 6. Fresh and dry matter measurements are shown in Figures 7 and 8, whereas the chlorophyl content of the tobacco seeds are depicted in Figure 9.

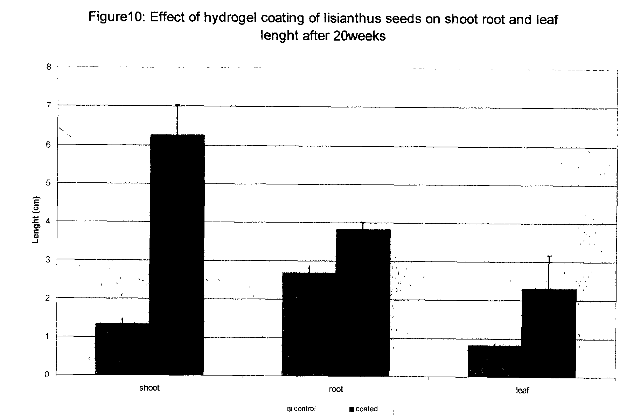

In Figures 10 the effect of our coating on lisianthus growth (shoot, leaf and root lenght) is demonstrated.

### DESCRIPTION FIGURES

Figure 1: Effect hydrogel coating (type and amount) on lettuce greeenhouse germination
Figure 2: Effect hydrogel coating (type and amount) on lettuce moisture stress germination with 30 cc water

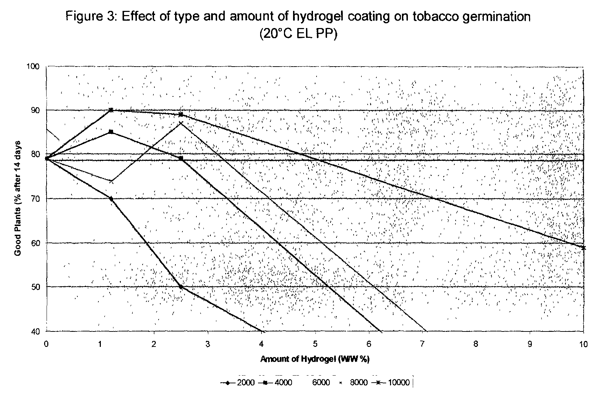

Figure 3: Effect of type and amount of hydrogel coating on tobacco germination (20°C EL PP)

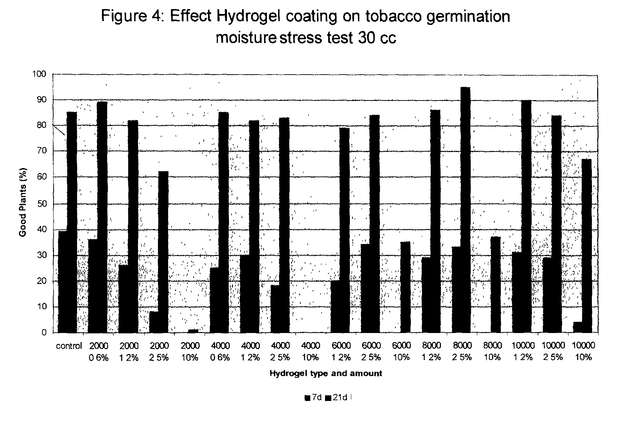

Figure 4: Effect hydrogel coating on tobacco moisture stress germination with 30 cc water

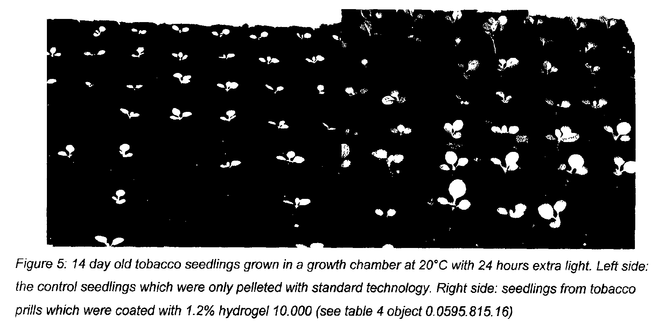

Figure 5: 14 day old tobacco seedlings grown in a growth chamber at 20°C with 24 hours extra light. Left side: the control seedlings which were only pelletted with standard technology. Right side: seedlings from tobacco prills which were coated with 1.2% hydrogel 10.000 (see table 4 object 0.0595.815.16)

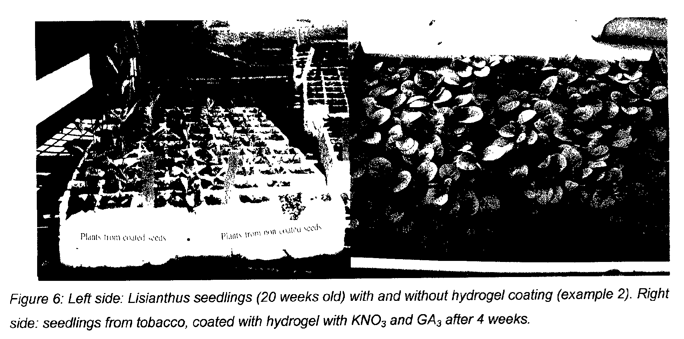

Figure 6: Left side: Lisianthus seedlings ( 20 weeks old) eith and without hydrogel coating (see Experimental part, example 2). Right side: seedlings from tobacco, coated with hydrogel with KNO₃ and GA₃ after 4 weeks

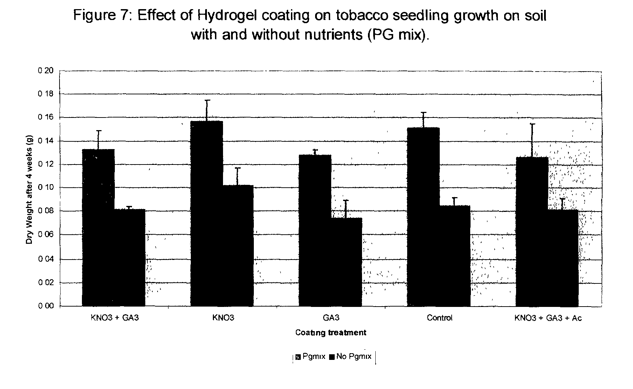

Figure 7: Effect of hydrogel coating on tobacco seedlings growth on soil with and without nutrients (PG mix)

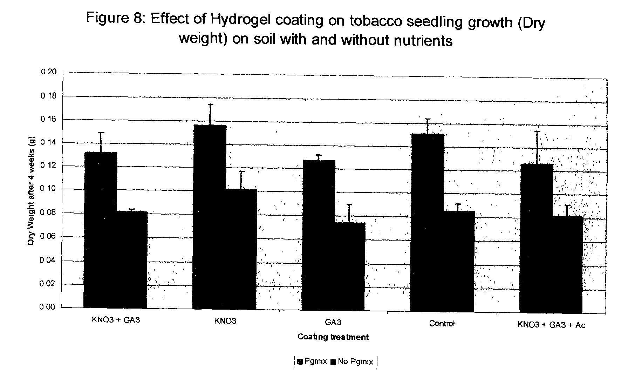

Figure 8: Effect of hydrogel coating on tobacco seedling growth (dry weight) on soil with and without nutrients

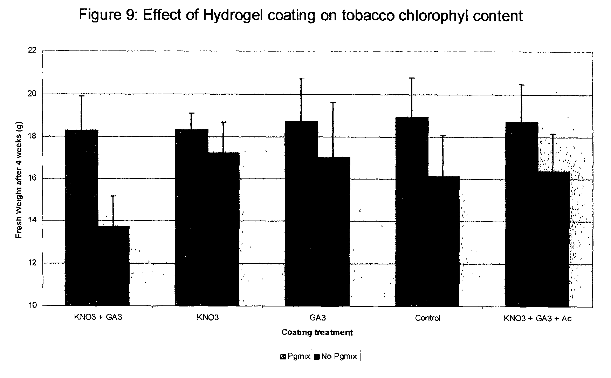

Figure 9: Effect of hydrogel coating on tobacco chlorophyl content
Figure 10: Effect of hydrogel coating of Lisianthus seeds on shoot, root and leaf length after 20 weeks

### REFERENCES

1) Markus A.,Wiesman Z. and Wolf D. Encapsulated fertilizers PCT WO 99/07654, (1999)
2) Markus A. Advances in technology of controlled release pesticide formulations in Microencapsulation methods and industrial application p.73-93, Marcel Dekker Inc.

## Claims

1. A method for coating seeds and/or embryoids with a polymeric envelope **characterised by** using an organic solvent in an essential anhydrous polymerisation reaction.

2. A method for coating seeds and/or embryoids according to claim 1 wherein said polymeric envelope further comprises at least one additive selected from the group of plant protection products, plant growth hormones, growth stimulants, fillers and fertilizers.

3. A method for coating seeds and/or embryoids according to claim 2 wherein said additive is water-unstable, water-reactive or water-insoluble.

4. A method for coating seeds and/or embryoids according to claim 2 or 3 wherein said plant protection product is a pesticide.

5. A method for coating seeds and/or embryoids according to anyone of claims 2 to 4 wherein said plant protection product is Gaucho 70WP.

6. A method for coating seeds and/or embryoids according to claim 2 or 3 wherein said plant growth hormone is gibberelic acid.

7. A method for coating seeds and/or embryoids according to claim 2 or 3 wherein said fertilizer is potassium nitrate.

8. A method for coating seeds and/or embryoids according to anyone of claims 1 to 7 wherein said polymeric envelope comprises poly urethane.

9. A method for coating seeds and/or embryoids according to anyone of claims 1 to 8 wherein said polymerisation reaction comprises isocyanate copolymer and polyethylene glycol.

10. A method for coating seeds and/or embryoids according to anyone of claims 1 to 9 wherein said polymerisation reaction further comprises a catalyst.

11. A method for coating seeds and/or embryoids according to claim 10 wherein said catalyst is DABCO.

12. A method for coating seeds and/or embryoids according to anyone of claims 1 to 11 wherein said organic solvent is acetone.

13. A method for coating seeds and/or embryoids according to anyone of claims 1 to 12 wherein said polymerisation is interfacial polymerisation.

14. A method for coating pre-coated seeds and/or embryoids according to anyone of claims 1 to 13.
